# FASCICULE DE BREVET EUROPEEN

(11) **EP 3 795 877 B1**
(45) Date de publication et mention de la délivrance du brevet: **26.04.2023**
(21) Numéro de dépôt: 20196989.6
(22) Date de dépôt: 18.09.2020
(51) Int. Cl.: F16L 23/04

(54) **COLLIER DE SERRAGE**
SCHLAUCHKLEMME
CLAMPING COLLAR

(30) Priorité: 23.09.2019 FR 1910486
(43) Date de publication de la demande: 24.03.2021
(73) Titulaire: Caillau, 92130 Issy-les-Moulineaux (FR)
(72) Inventeur: RIGOLLET, Nicolas, 41200 ROMORANTIN (FR); PREVOT, Fabrice, 41130 SELLES-SUR-CHER (FR)
(74) Mandataire: Cabinet Beau de Loménie

(56) Documents cités:
- EP-A1- 0 636 826
- WO-A1-2017/149103
- DE-U1- 8 903 806
- FR-A1- 2 655 405
- FR-A1- 2 777 970

## Description

### Arrière-plan de l'invention

L'exposé concerne un collier de serrage comprenant une ceinture métallique configurée pour être serrée sur un objet, la ceinture présentant un renfoncement interne ayant un fond délimité par des joues orientées vers l'axe de la ceinture.

Un tel collier de serrage sert à serrer un objet, par exemple un tuyau emmanché sur un embout, ou bien deux portions de tube raccordées entre elles en bout à bout ou par emmanchement. Cet objet présente un renflement annulaire qui est reçu dans le renfoncement de la ceinture. Les côtés de ce renflement annulaire forment des surfaces d'appui contre lesquelles s'appuient les joues qui délimitent le renfoncement lorsque l'objet est serré par le collier. Cet appui favorise la sécurité du serrage. S'agissant d'un objet formé de deux portions d'objet, par exemple deux portions de tubes, aboutées dans la région du renflement, cet appui sécurise cet aboutement.

Le collier de serrage peut être utilisé dans un environnement soumis à d'importantes variations de température, par exemple en extérieur ou dans le compartiment moteur d'un véhicule ou encore sur une ligne d'échappement du moteur d'un véhicule.

Des colliers de ce type sont connus par exemple par les documents de brevet EP 0 636 826, EP 1 697 672, EP 0 305 232 et EP 2 585 751.

Pendant son utilisation, le collier peut être soumis à d'importantes forces de tension. D'une part, le collier est en principe dimensionné pour serrer des objets de dimensions définies. Cependant, du fait des tolérances de fabrication de ces objets, le collier peut devoir s'adapter à des dimensions légèrement différentes de celles pour lesquelles il est initialement dimensionné. En particulier, il peut être souhaitable que la ceinture s'allonge légèrement pour s'adapter à un objet de diamètre un peu plus important que prévu, tout en maintenant un serrage convenable. Par ailleurs, une fois serré par le collier, l'objet peut se déformer, notamment du fait d'éventuelles dilations thermiques. Il est souhaitable que le collier puisse accompagner ces dilatations, en maintenant un effort de serrage convenable.

On connaît des colliers à bande plate, c'est-à-dire dont la ceinture est dépourvue de renfoncement interne et de joues, qui sont munis de réserves de capacité formées dans des ondulations de la bande en saillie radiale, comme dans les documents de brevet EP 2 480 355 et EP 0 627 591. De telles réserves de capacité donnent globalement satisfaction pour des colliers à bande plate, sans renfoncement interne et sans joues.

On connaît par ailleurs, par les documents de brevet FR 2 777 970, WO 2017 149 103, DE 298 16 889U, EP 0 403 379 et US 2 897 569, un collier de serrage dont la ceinture présente un renfoncement interne délimité par des joues et une partie de bande plate, dépourvue de joues, qui sert de charnière permettant d'ouvrir la ceinture.

### Objet et résumé de l'invention

Il existe un besoin pour un collier dont la ceinture présente un renfoncement interne délimité par des joues orientées vers l'axe de la ceinture, qui soit doté d'une capacité d'allonger la ceinture lors du serrage du collier ou une fois le collier serré, pour les raisons indiquées plus haut. L'exposé vise en particulier à proposer un collier de serrage, dont la ceinture présente un renfoncement interne et qui soit néanmoins doté d'une réserve de capacité simple à réaliser et fiable.

Ainsi, l'exposé concerne un collier de serrage comprenant une ceinture métallique configurée pour être serrée sur un objet, la ceinture présentant un renfoncement interne comprenant un fond délimité par des joues orientées vers l'axe de la ceinture, le collier présentant une réserve de capacité, formée par une portion de la ceinture susceptible de s'allonger sous l'effet d'une tension de serrage de la ceinture, la réserve de capacité étant délimitée, selon la direction circonférentielle de la ceinture, par des portions de liaison dans lesquelles les joues sont interrompues et la réserve de capacité présentant des portions de joues orientées vers l'axe de la ceinture.

La réserve de capacité est donc formée par une portion de la ceinture délimitée à chacune de ses extrémités par une portion de liaison dans laquelle les joues sont interrompues. Ainsi, la portion dans laquelle la ceinture est apte à s'allonger pour s'adapter à des dimensions augmentée de l'objet serré par le collier, est délimitée et représente une partie bien définie de la ceinture. La réserve de capacité peut être simple à réaliser puisqu'elle est ainsi découplée mécaniquement du reste de la ceinture.

Cependant, la réserve de capacité présente des portions de joues qui sont orientées vers l'axe de la ceinture. Ces portions de joues ont plusieurs fonctions. D'une part, elles peuvent venir en appui contre les surfaces d'appui de l'objet serré par le collier en assurant ainsi, dans la région de la réserve de capacité, la fonction d'appui assurée par les joues qui délimitent le renfoncement. Par ailleurs, lors de l'allongement de la réserve de capacité, les portions de joues ont tendance à se rapprocher l'une de l'autre selon la direction de l'axe de la ceinture, ce qui renforce l'appui supplémentaire ainsi réalisé dans la région de la réserve de capacité. En outre, les portions de joues confèrent de la rigidité à la réserve de capacité. En particulier, elles peuvent être dimensionnées, en hauteur (radialement) et en longueur (selon la circonférence du collier), de manière à conférer la rigidité souhaitée à la réserve de capacité. Etant orientées vers l'axe de la ceinture, les portions de joues forment des éléments de paroi qui comprennent une dimension (composante) orientée parallèlement à la circonférence de la ceinture, et une dimension (composante) inclinée par rapport à cet axe, en particulier en étant sensiblement radiale. Pour chaque portion de joue, les efforts d'allongement auxquels est soumise la réserve de capacité s'exercent naturellement selon la direction circonférentielle de la ceinture, mais se répartissent également dans la hauteur de la portion de joue, selon la composante inclinée par rapport à l'axe de la ceinture. Cette répartition des efforts impacte l'amplitude de déformation de la réserve de capacité et tend à modifier l'inclinaison de la portion de joue par rapport à l'axe de la ceinture, ce qui a pour effet de rapprocher les portions de joues l'une de l'autre.Par ailleurs, dans les portions de liaison, la ceinture peut être déformée par des déformations autres qu'un allongement de sa circonférence. En particulier, la ceinture peut être pliée dans les portions de liaison qui peuvent alors jouer le rôle de charnières favorables au montage du collier sur l'objet à serrer.

Optionnellement, les portions de joues présentent des bords courbes convexes.

Optionnellement, la réserve de capacité présente au moins une portion de bord concave.

Optionnellement, les portions de joues sont au moins en partie situées axialement de part et d'autre de ladite portion de bord concave.

Optionnellement, la portion de bord concave s'étend dans l'encombrement circonférentiel de la ceinture.

Optionnellement, la réserve de capacité présente au moins un trou.

Optionnellement, le trou s'étend jusque dans les portions de joues.

Optionnellement, le trou présente au moins l'une des caractéristiques géométriques suivantes :
- une longueur au moins égale à 30% de la longueur de la réserve de capacité, ces longueurs étant mesurées selon la direction circonférentielle de la ceinture, et
- une largeur au moins égale à 50% de la largeur de la ceinture, ces largeurs étant mesurées selon la direction de l'axe de la ceinture.

Optionnellement, les portions de joues sont formées dans des lobes.

Optionnellement, au moins l'un des lobes présente un sommet situé axialement au droit d'une zone de fond de la concavité de la portion de bord concave.

Optionnellement, la ceinture porte une oreille saillante au voisinage d'une première extrémité et un crochet au voisinage d'une deuxième extrémité, le crochet présentant une paroi avant et une partie courante, la paroi avant étant destinée à être retenue derrière l'oreille alors que le crochet est accroché sur l'oreille pour maintenir le collier à l'état serré, la partie courante reliant la paroi avant à la ceinture et présentant une surface de prise en saillie radiale vers l'extérieur et deux bordures latérales qui s'étendent axialement de part et d'autre de la surface de prise en étant radialement en retrait par rapport à la surface de prise.

Optionnellement, la surface de prise est formée à l'arrière d'un bossage de la partie courante.

Optionnellement, le collier de serrage est formé en une seule pièce dans une bande de métal.

La réserve de capacité peut rester dans l'encombrement général du collier, en particulier sans former une ondulation en saillie radiale. En particulier la portion de bord concave de la réserve de capacité peut être formée dans l'anneau cylindrique que forme le fond du renfoncement. Ainsi, elle peut ne pas dépasser radialement par rapport au reste de la ceinture, et peut assurer une continuité d'appui sur l'objet serré à l'aide du collier, cette continuité étant éventuellement interrompue seulement localement par la concavité de la portion de bord concave, par exemple le trou. Cependant, la géométrie de la portion de bord concave et la présence des portions de joues de la réserve de capacité, neutralisent cette interruption.

La réserve de capacité est extrêmement simple à fabriquer. Par exemple, la ceinture étant réalisée dans une bande de métal, il suffit, préalablement au roulage de la bande formant la ceinture, de découper des encoches sur les bords longitudinaux de la bande et de réaliser la portion de bord concave par découpe ou poinçonnage. Les encoches définissent les zones dans lesquelles les joues sont interrompues, c'est-à-dire les portions de liaison. Ces encoches peuvent être localisées seulement dans ces portions de liaison, de manière à laisser subsister les portions de joues de la réserve de capacité entre deux encoches définissant les deux portions de liaison d'une même réserve de capacité. On peut cependant les relier par une découpe, en particulier une découpe courbe définissant le bord des portions de joues, de sorte que ces portions de joues aient une hauteur radiale moindre que celle des joues qui délimitent le fond du renfoncement dans les régions de la ceinture autres que la réserve de capacité. On peut à l'inverse doter les portions de joues de la réserve de capacité d'une hauteur radiale supérieure à celle des joues des autres régions de la bande, par exemple en découpant les bords de la bande dans lesdites autres régions.

Le présent exposé sera bien compris et ses avantages apparaîtront mieux à la lecture de la description détaillée qui suit, d'un mode de réalisation représenté à titre d'exemple non limitatif.

### Brève description des dessins

[Fig. 1] La figure 1 est une vue de côté d'un collier selon le présent exposé à l'état ouvert.
[Fig. 2] La figure 2 est une vue en perspective du collier de la figure 1.
[Fig. 3] La figure 3 est une autre vue en perspective du collier de la figure 1, prise sous un autre angle.
[Fig. 4] La figure 4 est une vue de dessus, selon la flèche IV, du collier de la figure 1.
[Fig. 5] La figure 5 montre la zone Z de la figure 1, prise selon la flèche V indiquée sur la figure 1.
[Fig. 6] La figure 6 est une vue en coupe de la figure 5 dans le plan radial VI-VI.
[Fig. 7] La figure 7 illustre une possibilité pour la mise en place du collier autour d'un objet devant être serré à l'aide du collier.
[Fig. 8] La figure 8 montre en vue de côté le collier serré sur l'objet.
[Fig. 9] La figure 9 est une vue en coupe dans le plan IX-IX de la figure 8.
[Fig. 10] La figure 10 est une vue analogue à la figure 5, pour une variante de réalisation.
[Fig. 11] La figure 11 est une vue de côté, selon la flèche XI de la figure 10.

### Description détaillée de l'objet de l'exposé

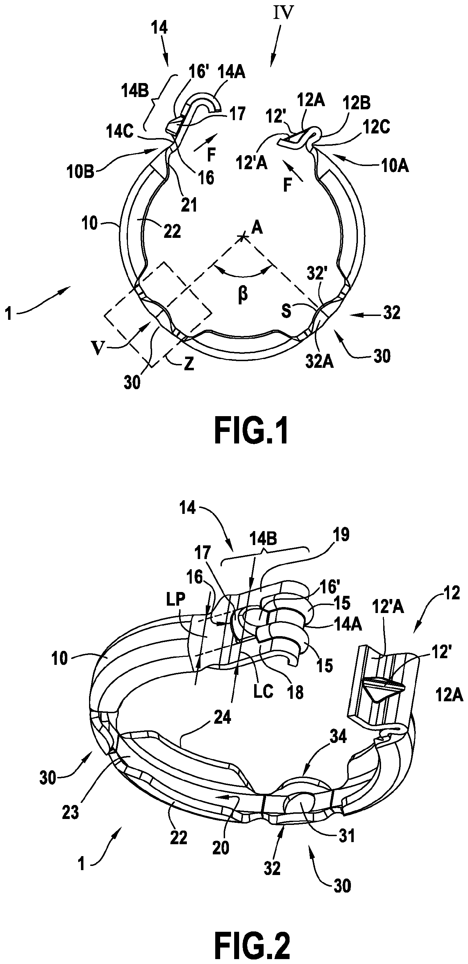

En référence à la figure 1, on voit que le collier de serrage 1 présente une ceinture 10 qui, à une première extrémité 10A, porte une oreille 12 et, à une deuxième extrémité 10B, porte un crochet 14. Le collier est ici représenté à l'état ouvert, le crochet n'étant pas accroché sur l'oreille et les extrémités 10A et 10B étant écartées. On comprend que lorsque le collier est fermé par accrochage du crochet sur l'oreille, la ceinture délimite une circonférence cylindrique centrée sur un axe A.

Ainsi, dans l'exemple représenté, le collier est de type "ouvert" et peut être fermé et serré par accrochage du crochet sur l'oreille. La description qui suit se rapporte à un crochet de type particulier, dépourvu de pli radial à sa base arrière. Cependant, d'autres types de crochet pourraient être prévus, en particulier un crochet pourvu d'un pli à sa base arrière, par exemple comme dans la demande de brevet EP 0 636 826.

En outre, d'autres moyens de fermeture sont envisageables. Par exemple, le collier pourrait être de type à vis tangentielle, par exemple comme dans la demande de brevet EP 0 305 232, EP 2 585 751 ou EP 1 697 672.

Il pourrait également s'agir d'un collier de type fermé, serré par déformation d'un élément tel qu'une oreille en U inversé.

De manière générale, tous types de moyens de serrage pourraient être prévu. Comme on le verra dans la suite, la réserve de capacité selon le présent exposé trouve avantage à être présente dans ces différents types de colliers. Cependant, lorsque sa fonction première est d'adapter la circonférence de la ceinture à des dimensions d'un objet qui, par exemple en raison des tolérances de fabrications, seraient légèrement supérieures à celles pour lesquelles le collier a été initialement dimensionné, la réserve de capacité est particulièrement intéressante pour les colliers dont le mode de serrage ne permet pas en lui-même de faire varier son diamètre, en particulier pour les colliers qui sont fermés par accrochage d'un crochet sur une oreille. Dans certains cas, le serrage d'un collier à vis tangentielle peut permettre de serrer le collier sur des diamètres légèrement différents, selon le degré de vissage de la vis.

Dans l'exemple représenté, la fermeture et le serrage du collier s'effectuent grâce à l'oreille 12 et au crochet 14.

L'oreille 12 comprend en l'espèce un double pli 12A, 12B, faisant saillie radialement vers l'extérieur par rapport à la circonférence de la ceinture et rattaché à l'extrémité 10A de cette ceinture en 12C. La face externe du pli avant 12A présente une nervure de rigidification 12' qui s'étend en l'espèce jusque sur un prolongement 12'A de la première extrémité 10A situé vers l'avant au-delà de l'oreille.

Le crochet présente une paroi avant 14A et une partie courante 14B qui est rattachée à la deuxième extrémité 10B de la ceinture en 14C. La paroi avant 14A est pliée vers l'intérieur, c'est-à-dire vers l'axe A, de manière à être capable de s'accrocher derrière l'oreille 12 pour maintenir le collier à l'état serré.

Par convention, au sens du présent exposé, on qualifiera de "externe" un élément orienté à l'opposé de l'axe A et de "interne" un élément orienté vers l'axe A. Sachant que, pour fermer le collier, le crochet et l'oreille se déplacent l'un par rapport à l'autre dans le sens des flèches F indiquées sur la figure 1, un élément du crochet sera qualifié de "avant" lorsqu'il se trouve vers l'avant dans le sens de déplacement du crochet vers l'oreille pour le serrage du collier. Un élément du crochet sera qualifié de "arrière" lorsqu'il se trouve au contraire vers l'arrière dans le même sens de déplacement. De manière analogue, s'agissant de l'oreille, un élément sera qualifié de "avant" lorsqu'il est situé vers l'avant dans le sens du déplacement de l'oreille vers le crochet et de "arrière" lorsqu'il est situé vers l'arrière dans le même sens de déplacement.

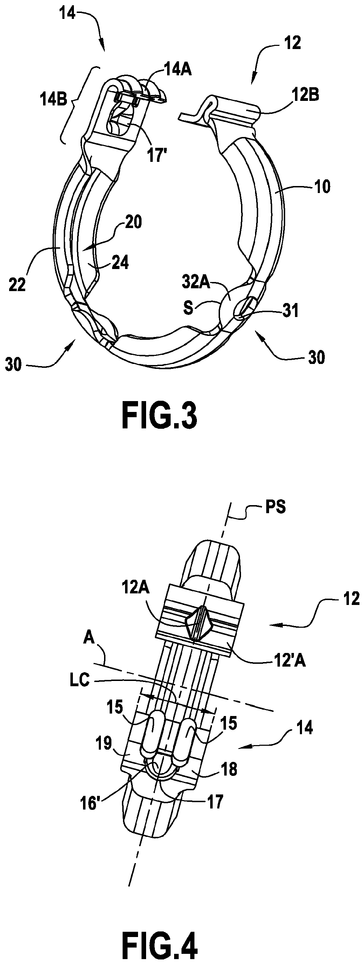

La partie courante 14B du crochet est située à l'arrière de la paroi avant 14A et s'étend vers l'arrière depuis cette paroi avant jusqu'à la zone de raccordement 14C du crochet à la deuxième extrémité 10B de la ceinture. Ainsi, la partie courante 14B relie la paroi avant 14A à la ceinture 10. Cette partie courante 14B présente une surface de prise 16 qui se trouve en saillie radiale vers l'extérieur. Plus précisément, en considérant la figure 2, on voit que deux bordures latérales, respectivement 18 et 19 sont situées axialement de part et d'autre de la surface de prise 16. Ici, « axialement » signifie dans une direction selon l'axe A de la ceinture. On voit que ces deux bordures latérales sont en retrait radialement par rapport à la surface de prise 16. En l'espèce, la surface de prise 16 est formée à l'arrière d'un bossage 17 que présente la partie courante 14B, ce bossage se traduisant par un renfoncement 17' sur la face interne de la partie courante 14B du crochet, ainsi que le montre la figure 3.

La surface arrière du bossage 17 est redressée radialement de manière abrupte en formant un angle significatif par rapport à la surface externe de la partie courante du crochet qui est située immédiatement à l'arrière de cette surface de prise, de manière à offrir une prise pour un outil de serrage, par exemple pour la mâchoire d'une pince. En revanche, la partie avant 16' du bossage est raccordée en pente plus douce à la surface externe de la partie courante du crochet qui est située à l'avant du bossage.

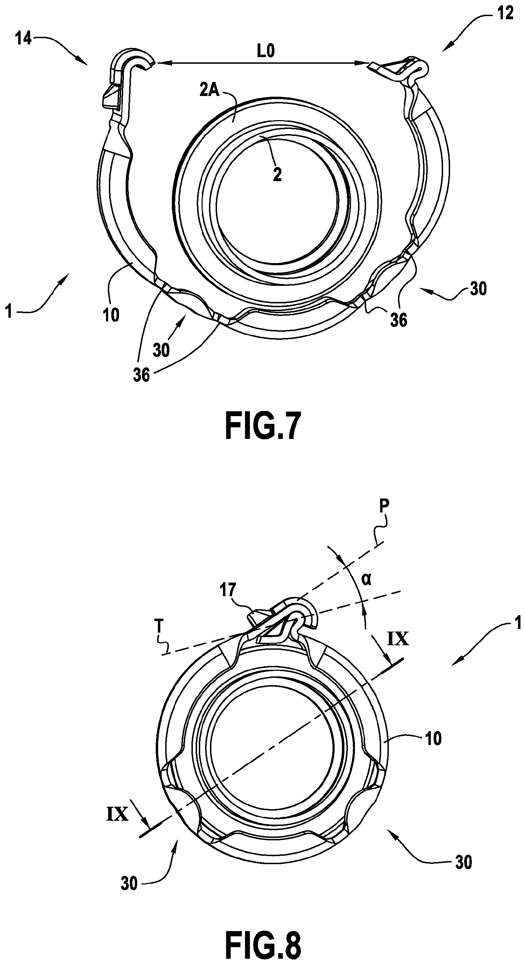

Alors que la surface de prise forme un ressaut abrupt par rapport aux surfaces environnantes, les bordures latérales de la partie courante du crochet sont reliées à l'extrémité 10B de la ceinture dans la continuité de cette dernière, sans pli radial vers l'extérieur. En l'occurrence, les bordures latérales sont sensiblement planes. Comme on le voit sur la figure 8, leurs surfaces externes définissent un plan P qui est incliné d'un angle α par rapport à un plan T tangent à la surface circonférentielle externe de la ceinture 10, à la deuxième extrémité 10B de cette dernière, dans la zone 14C de rattachement du crochet à la ceinture. L'angle α est compris entre 5° et 60°, optionnellement entre 10° et 40°. Par exemple, l'angle α peut être de l'ordre de 20°. Les plans P et T, ainsi que l'angle α précédemment cité sont représentés sur la figure 8, à l'état fermé du collier, alors que le crochet est accroché derrière l'oreille. Par convention, les valeurs indiquées ci-dessus pour l'angle α sont mesurées dans cette situation dans laquelle le collier est fermé. Les bordures latérales situées de part et d'autre de la surface de prise 16 s'opposent à la déformation de cette surface de prise. En l'espèce, ces bordures latérales s'opposent à la déformation du bossage 17 dans lequel la surface de prise 16 est formée. Cette surface de prise offrant un plan d'appui à l'outil de serrage, il est inutile de doter le crochet d'un pli dans la zone de raccordement 14C avec l'extrémité 10B de la ceinture. Comme indiqué précédemment, ce raccordement s'effectue dans la continuité de la surface circonférentielle de la ceinture.

La surface de prise s'étend sur une largeur LP (voir figure 2) qui est comprise entre 20 % à 70 %, optionnellement entre 30 % et 50 % de la largeur LC de la partie courante du crochet, ces largeurs étant mesurées axialement, c'est-à-dire selon la direction de l'axe A. Ainsi, les bordures latérales présentent chacune une largeur comprise entre 15 % et 40 % de la largeur LC, optionnellement entre 25% et 40% de cette largeur LC. Par exemple, la largeur de la partie courante du crochet est divisée en trois tiers égaux ou sensiblement égaux, respectivement occupés par une bordure latérale, la surface de prise et l'autre bordure latérale. En l'espèce, la largeur LP de la surface de prise est également la largeur du bossage 17. Ces bordures latérales forment des zones de la partie courante du crochet ayant suffisamment de matière pour présenter la résistance mécanique requise. Le bossage 17, qui présente des dimensions réduites, forme une zone fortement écrouie, peu sujette à déformation.

En l'espèce, le collier est symétrique par rapport à un plan de symétrie PS perpendiculaire à l'axe A, ainsi qu'on le voit sur la figure 4. La surface de prise 16 est située dans une région centrale de la largeur LC de la partie courante 14B du crochet, cette largeur étant mesurée parallèlement à l'axe A. On voit sur les figures que le bossage 17 s'étend vers l'avant du crochet sensiblement jusqu'à la jonction entre la partie courante 14B et la paroi avant 14A.

En l'espèce, la paroi avant 14 du crochet présente au moins une nervure de rigidification 15. En l'espèce, cette paroi avant présente deux nervures de rigidification 15 situées de part et d'autre du plan de symétrie PS. On voit que les nervures de rigidification 15 sont reliées à l'avant du bossage 17. En effet, la partie avant 16' de la surface externe du bossage vient naturellement se rattacher aux nervures 15. On constitue ainsi des zones d'écrouissage dans le crochet qui s'opposent à sa déformation. Le bossage 17 peut présenter une largeur relativement réduite, ainsi qu'il a été indiqué, et constitue donc une zone fortement écrouie peu sujette à la déformation. La présence des bordures latérales de part et d'autre du bossage vient renforcer la résistance de la partie courante du crochet à la déformation. Les nervures 15 s'étendent en l'espèce non seulement sur la paroi avant en constituant ainsi des zones fortement écrouies s'opposant à la déformation de cette paroi, mais également jusqu'au bossage en s'opposant ainsi à une déformation de la pliure entre la paroi avant et la partie courante du crochet. Le crochet est ainsi particulièrement robuste. Selon les applications, les nervures 15 pourraient ne pas être présentes, et la surface de prise être réalisée sur un élément autre qu'un bossage, par exemple par une languette redressée par rapport à la surface de la partie courante. En effet, la surface de prise en tant que telle est sollicitée uniquement lors de l'opération de serrage du collier, lorsqu'elle coopère avec l'outil de serrage. Si cette surface de prise doit pouvoir présenter une résistance mécanique suffisante pour permettre la fermeture et le serrage du collier, il n'est pas nécessaire que cette résistance soit pérenne. En revanche, les bordures latérales assurent sur le long terme une résistance mécanique de la partie courante du crochet s'opposant à l'allongement de ce dernier pendant toute la durée de maintien du serrage sur l'objet serré à l'aide du collier.

On a évoqué plus haut le prolongement 12'A de la première extrémité 10A de la ceinture. Selon les applications, ce prolongement pourrait s'étendre sur une longueur plus grande que ce qui est représenté, par exemple sur une longueur analogue à celle de la partie courante 14B du crochet de manière à ponter cette dernière à l'intérieur du crochet pour assurer un appui continu de la ceinture du collier sur l'objet serré, même sous le crochet. En variante, il est possible de rapporter une semelle sous le crochet, ou de réaliser le crochet dans une bande fixée sur la deuxième extrémité de la ceinture, comme illustré, pour un collier à bande plate, dans la demande de brevet européen EP 1 352 192 pour assurer un tel appui continu.

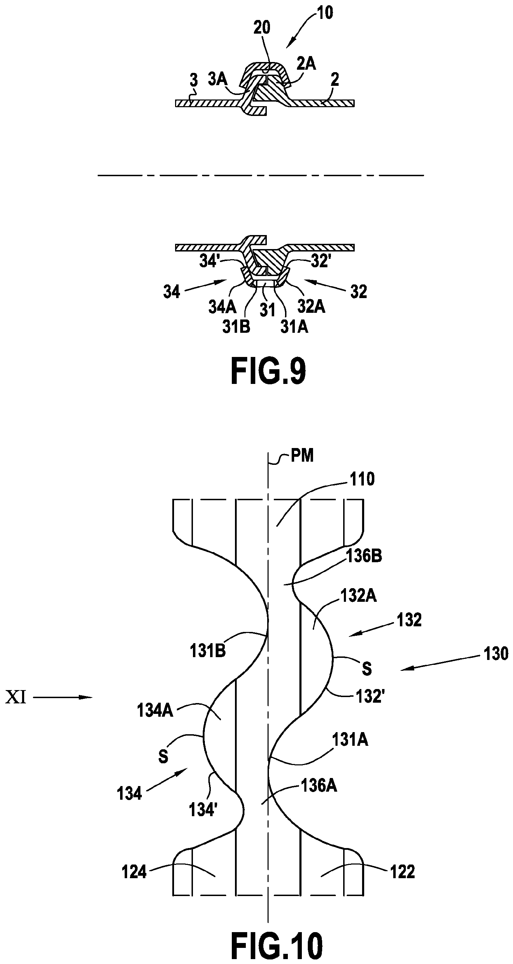

La ceinture 10 présente un renfoncement annulaire interne 20. Par exemple, comme le montre la figure 9, le collier peut servir à raccorder entre elles deux parties 2 et 3 d'un objet présentant des saillies annulaires 2A et 3A à leurs extrémités. Il s'agit par exemple de deux portions de tubes 2, 3 dont les extrémités, pourvues des saillies annulaires, sont amenées l'une contre l'autre de sorte que leurs saillies annulaires peuvent être reçues dans le renfoncement 20 de la ceinture du collier.

Comme on le voit en particulier sur la figure 2, le renfoncement interne 20 présente un fond 23 délimité par des joues respectivement 22 et 24 qui sont orientées vers l'intérieur, c'est-à-dire vers l'axe A de la ceinture. Ces joues forment les limites axiales du renfoncement annulaire 20 ; elles sont rabattues vers l'axe A du collier par rapport à la périphérie externe de la ceinture.

Le renfoncement présente en l'espèce une forme sensiblement en U, avec un fond plat 23, qui délimite une surface cylindrique et par rapport auquel les joues 22 et 24 sont rabattues. Le renfoncement pourrait cependant présenter une forme en V. On peut prévoir, comme dans l'exemple représenté, que le renfoncement ait globalement une forme en U, mais que les joues, formant les branches du U, soient inclinées par rapport à un plan radial perpendiculaire à l'axe A, de manière à aller en s'éloignant l'une de l'autre à mesure qu'elles se rapprochent de l'axe A. Ainsi, le serrage du collier sur les portions d'objet 2, 3, tend à rapprocher l'une de l'autre les saillies annulaires 2A et 3A.

On voit notamment sur la figure 2 que les bordures latérales 18 et 19 sont au moins en partie formées dans des prolongements des joues 20 et 22, respectivement, qui sont redressés de manière à être orientés selon l'axe A. Ainsi, dans la zone 14C de raccordement de partie arrière du crochet à l'extrémité 10B de la ceinture, les joues 20 et 22 sont déformées pour être ramenées parallèlement à l'axe A. Ces déformations constituent des zones de pliage en torsion 21 dans lesquelles le matériau de la bande est fortement écroui. Elles contribuent également à la résistance mécanique de la partie courante du crochet.

On voit que les bordures latérales 18 et 19 s'étendent sur la totalité de la longueur de la partie courante 14B, depuis la jonction du crochet avec la ceinture 10 dans la zone arrière 14C, jusqu'à la paroi avant 14A.

Selon l'exposé, le collier de serrage présente au moins une réserve de capacité 30 formée par une portion de la ceinture 10 qui est susceptible de s'allonger lorsque la tension de serrage de la ceinture dépasse une valeur seuil. En l'espèce, deux réserves de capacité 30 sont prévues dans deux zones distinctes de la ceinture. Par exemple, ces réserves de capacité sont espacées angulairement d'un angle β de l'ordre de 50 à 180°, par exemple de l'ordre de 90°.

Les deux réserves de capacité étant ici identiques, on décrit l'une d'entre elles.

La réserve de la capacité 30 est délimitée selon la direction circonférentielle de la ceinture par des portions de liaison 36 dans lesquelles les joues 22 et 24 qui délimitent le renfoncement interne 20 sont interrompues. La réserve de capacité est ainsi mécaniquement dissociée du reste de la ceinture. Elle peut se déformer par allongement selon la circonférence de la ceinture, tandis que le reste de la ceinture ne s'allonge pas.

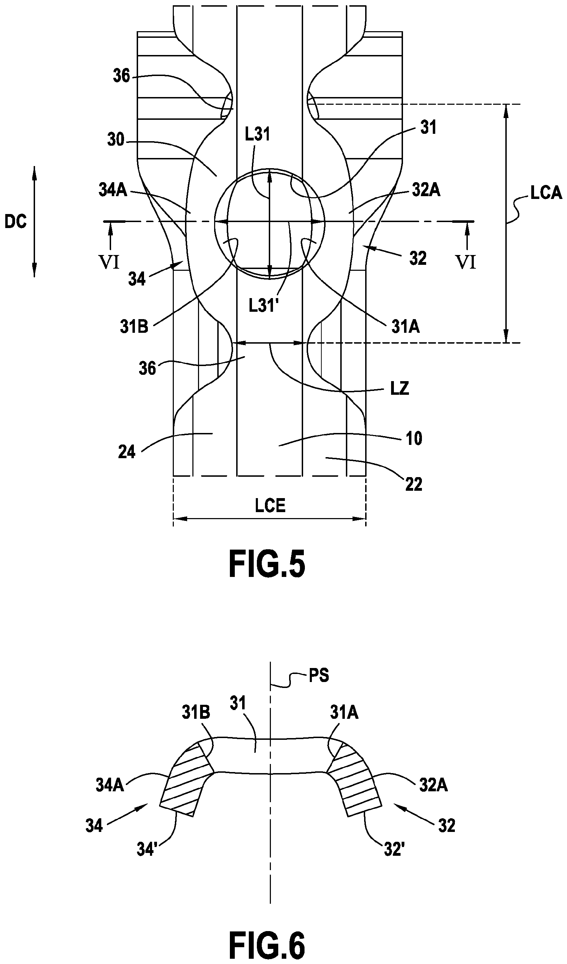

Par ailleurs, les portions de liaison peuvent se comporter comme des charnières. Du fait de l'interruption des joues 20 et 22 dans ces portions de liaison 36, lesdites portions de liaison présentent une quantité de matériau moindre que les portions de la ceinture qui ont une longueur équivalente mais sont pourvues de joues. De plus, les portions de liaison 36 présentent en l'espèce une largeur LZ (voir figure 5) inférieure à celle de la ceinture. Comme on le voit sur la figure 7, la fonction de charnières des portions de liaison, qui sont en l'espèce au nombre de 4 puisqu'il y a deux réserves de capacité 30, permet d'ouvrir le collier largement pour favoriser sa mise en place autour de l'objet 2, 3 qu'il doit serrer par un déplacement relatif radial entre le collier et cet objet. En d'autres termes, sur la figure 7, la largeur LO de l'ouverture dégagée entre le crochet et l'oreille (qui sont ici un exemple de moyens servant à fermer et serrer le collier) est ici supérieure aux dimensions radiales de l'objet 2, 3 et le collier peut donc être amené latéralement autour de cet objet. Cependant, cette ouverture maximale ne nuit pas à l'intégrité et à la résistance mécanique du collier puisqu'elle est due à des déformations de ce dernier dans les portions de liaison qui font office de charnières. Par ailleurs, la quantité de matériau dans ces portions de liaison reste suffisante pour qu'elles ne soient pas aisément déformables dans le sens de la direction circonférentielle de la ceinture.

Bien que les joues 22 et 24 soient interrompues dans les portions de liaison 36, la réserve de capacité 30 présente des portions de joues 32 et 34, qui sont également orientées vers l'axe A de la ceinture 10. Les portions de joues 32 et 34 sont donc en l'espèce globalement orientées comme les joues 22 et 24. En l'espèce, les portions de joues 32 et 34 présentent des bords courbes convexes, respectivement 32' et 34'. Ici, les portions de joues 32 et 34 sont formées dans des lobes, respectivement 32A et 34A dont le sommet S est situé à mi-longueur de la réserve de capacité 30.

Par ailleurs, on voit en particulier en référence à la figure 5 que la réserve de capacité 30 présente un orifice déformable 31. Sous l'effet d'une tension de serrage élevée, cet orifice 31 peut se déformer dans le sens de sa longueur, c'est-à-dire s'agrandir selon la direction circonférentielle DC de la ceinture 10. Les bords 31A et 31B du trou 31 définissent des portions de bords concaves qui peuvent se déformer par une diminution de leur courbure (c'est-à-dire une augmentation de leur rayon de courbure selon l'axe A) pour permettre l'allongement de la réserve de capacité 30. Comme le trou 31, les bords 31A et 31B de ce trou s'étendent dans l'encombrement circonférentiel de la ceinture.

Les lobes 32A et 34A sont respectivement situés axialement de part et d'autre du trou 31. Ces deux lobes se trouvent dans la même tranche circonférentielle de la ceinture qui est également la tranche dans laquelle se trouve le trou 31 et ses portions de bords concaves 31A et 31B. Les sommets S de ces lobes sont situés à mi-longueur de la réserve de capacité 30 ce qui, ici, correspond également à la mi-longueur du trou 31. Le trou ayant ici une forme globalement circulaire, les sommets S des lobes sont axialement alignés avec la zone du trou 31 dans laquelle sa plus grande dimension diamétrale parallèle à l'axe A est mesurée. Ainsi, les sommets S sont situés axialement au droit d'une zone de fond de la concavité des portions de bords concaves 31A et 31B, la zone de fond étant la zone la plus creuse de la concavité, considérée axialement. La hauteur des lobes (mesurée radialement) détermine la quantité de matière présente entre le bord du trou et le bord convexe du lobe. La forme du lobe et la hauteur radiale de la portion de joue peuvent être choisies pour déterminer cette quantité de matière de telle sorte que la réserve de capacité 30 s'allonge selon l'amplitude souhaitée pour une valeur déterminée de la tension de la ceinture.

L'orientation des portions de joues 32 et 34 vers l'axe A rend relativement difficiles leurs déformations selon la direction circonférentielle de la ceinture. L'amplitude de déformation de la réserve de capacité est donc modérée. Comme on le voit sur la figure 6, les bords 31A et 31B de l'orifice 31 qui sont opposés selon la direction de l'axe A sont inclinés par rapport à un plan perpendiculaire à cet axe A, par exemple par rapport au plan de symétrie PS précédemment évoqué. En l'espèce, ceci est réalisé par le fait que les portions de joues 32 et 34 empiètent localement sur ces bords de l'orifice 31. Cette inclinaison contribue à la répartition des efforts de tension au sein des portions de joues. Cependant, les portions de joues pourraient ne pas empiéter sur les bords de l'orifice en étant alors totalement situées axialement de part et d'autres des bords 31A et 31B, alors qu'elles ne le sont qu'en partie dans l'exemple représenté.

Les lobes 32A et 34A dans lesquels sont formées les portions de joues ont une forme globalement convexe qui impacte favorablement la répartition des efforts de tension au sein des portions de joues.

En l'espèce, le trou 31 présente une forme globalement circulaire. Il s'agit de la forme qu'il présente avant que la réserve de capacité ne soit déformée par allongement de ce trou. En particulier, le trou peut être formé par un poinçon cylindrique.

En l'espèce, le trou 31 représente une portion significative de la réserve de capacité 30. Ainsi le trou 31 présente les caractéristiques géométriques (i) et (ii) suivantes :
- le trou 31 présente une longueur L31 au moins égale à 30% de la longueur LCA de la réserve de capacité 30, ces longueurs étant mesurées selon la direction circonférentielle de la ceinture (caractéristique (i)); et
- le trou 31 présente une largeur L31' au moins égale à 50% de la largeur LCE de la ceinture, ces largeurs étant mesurées selon la direction de l'axe de la ceinture (caractéristique (ii)).

On peut prévoir que seule l'une des caractéristiques (i) et (ii) soit présente.

Ces caractéristiques géométriques du trou sont vérifiées à l'état non allongé de la réserve de capacité. La longueur L31 du trou est en l'espèce son diamètre, le trou étant circulaire. De manière générale, cette longueur est sa longueur maximale, mesurée de part en part du trou, parallèlement à la direction circonférentielle de la ceinture. En général, cette longueur est mesurée dans le plan PS. La largeur L31' du trou est en l'espèce son diamètre, le trou étant circulaire. De manière générale, cette largeur est sa largeur maximale, mesurée de part en part du trou, parallèlement à la direction de l'axe A.

Ici, la longueur LCA de la réserve de capacité 31 est mesurée entre les deux portions de liaison 36. En l'espèce, l'interruption de joues 22 et 24 dans ces portions de liaison donnant à leurs bords des formes concaves, la longueur LCA est mesurée entre les fonds (sommets en creux) de ces concavités, c'est-à-dire entre les deux zones dans lesquelles la largeur LZ minimale des portions de liaison 36 est mesurée.

En outre, la largeur LCE de la ceinture est mesurée parallèlement à l'axe A, d'un bord à l'autre de cette ceinture, en incluant dans cette mesure les joues 32 et 34.

On relève que les zones de la réserve de capacité qui bordent le trou 31 restent dans la géométrie générale de la ceinture. En effet, les portions de bords concaves, en l'espèce formées par les bords du trou 31, se trouvent sensiblement dans la continuité des surfaces de révolution internes du renfoncement (fond cylindrique du renfoncement et faces internes annulaires des joues), ce qui permet une continuité d'appui de la ceinture du collier sur l'objet serré, même dans la région de la réserve de capacité. Le trou n'interrompt que très localement cette continuité d'appui et cette interruption est neutralisée par les surfaces internes qui bordent le trou. On peut prévoir que les portions de joues 32 et 34 aient une inclinaison initiale, par rapport à un plan radial perpendiculaire à l'axe A, tel que le plan PS, qui soit légèrement différente de l'inclinaison des joues 22 et 24 par rapport au même plan. Par exemple, les portions de joues 32 et 34 pourraient être rabattues légèrement davantage vers l'axe A que les joues 22 et 24, de manière à mettre la réserve de capacité sous précontrainte lors du serrage.

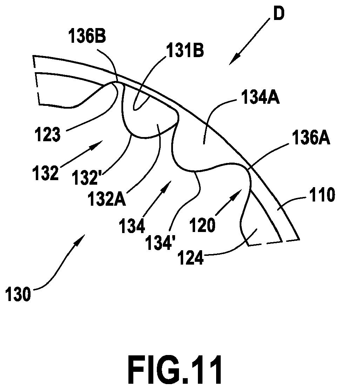

On décrit maintenant les figures 10 et 11, sur lesquelles on a représenté une portion de la ceinture 110 du collier, dont on voit le renfoncement interne 120 avec son fond 123 délimité par les joues 122 et 124 orientées vers l'axe de la ceinture.

La portion de ceinture représentée comporte une réserve de capacité 130 délimitée par des portions de liaison 136A, 136B dans lesquelles les joues 122 et 124 sont interrompues.

La réserve de capacité 130 présente des portions de joues 132, 134 orientées vers l'axe de la ceinture et au moins une portion de bord concave, en l'espèce deux portions de bord concaves 131A et 131B. En l'espèce, ces portions de bords concaves ne sont pas formées par les bords d'un trou. Vue de l'extérieur, selon la direction de la flèche D de la figure 11, la réserve de capacité présente une forme en vague. Considérée du bas vers le haut sur la figure 10, en suivant la direction circonférentielle de la ceinture, la réserve de capacité présente une première portion de bord concave 131A qui s'étend, vers le plan médian PM de la ceinture perpendiculaire à son axe A, dans la continuité du bord de la portion de liaison 136A dans la partie interrompue de la joue 122, et une deuxième portion de bord concave 131B, qui s'étend vers le plan médian PM de la ceinture dans la continuité du bord de la portion de liaison 136B dans la partie interrompue de la joue 124. Les deux portions de bord concaves 131A et 131B s'étendent donc sur les deux bords axialement opposés de la ceinture et sont décalés l'un par rapport à l'autre selon la circonférence de la ceinture. Les deux portions de joues 132 et 134 sont également décalées par rapport à l'autre selon la circonférence de la ceinture. En l'espèce, la portion de joue 132 s'étend au moins en partie dans la même tranche circonférentielle que la portion de bord concave 131B, et la portion de joue 134 s'étend au moins en partie dans la même tranche circonférentielle que la portion de bord concave 131A, mais ces deux tranches circonférentielles sont différentes. Cependant, les deux portions de joues 132 et 134 sont ici totalement situées axialement de part et d'autre de chacune des portions de bords concaves 131A et 131B. Comme dans l'exemple des figures 1 à 9, l'allongement de la réserve de capacité est réalisé par une déformation des portions de bords concaves qui tendent alors à se redresser en diminuant leurs courbures. On voit qu'en l'espèce, les portions de bord concaves empiètent sur la largeur (mesurée axialement) du fond 123 du renfoncement 120.

Les portions de joues 132 et 134 sont formées dans des lobes 132A et 134A, respectivement, et présentent des bords courbes convexes 132', 134'. Les sommets S des lobes 132A et 134A respectifs peuvent être décalés par rapport à la zone de fond des portions de bords concaves 131A et 131B respectives comme représenté, ou bien au contraire être situés axialement au droit de ces zones de fond.

Dans les deux exemples qui viennent d'être décrits, les portions de bords concaves présentent des formes courbes lisses. Elles pourraient cependant avoir des formes anguleuses. Par exemple, les bords du trou 31 pourraient avoir une forme polygonale.

Le collier pourrait bien entendu n'avoir qu'une seule réserve de capacité ou au contraire avoir plus de deux réserves de capacité. Eventuellement, plusieurs réserves de capacité pourraient être prévues dans la continuité les unes des autres, une portion de liaison délimitant la fin d'une réserve de capacité pouvant en même temps délimiter le début de la réserve de capacité adjacente. Ces différentes réserves de capacité peuvent être analogues ou au contraire être différentes, par exemple en ayant des joues et de portion(s) de bord concave (trou) de forme ou de nombre différents.

La longueur d'une réserve de capacité 30 ou 130 est relativement faible par rapport à celle de la ceinture. Par exemple, la longueur de la ou de chaque réserve de capacité est comprise entre 5% et 25% du diamètre de la ceinture à l'état serré, de préférence entre 10% et 20% de ce diamètre. La longueur de la ou de chaque portion de bord concave de la réserve de capacité, définie comme étant la longueur de la projection de ce bord dans un plan perpendiculaire à l'axe A de la ceinture (plans PS ou PM), est classique de l'ordre de 20% à 100% de la longueur de la réserve de capacité, en particulier de l'ordre de 25% à 70% de la longueur de réserve de capacité. Notamment, la longueur de la ou de chaque portion de bord concave est par exemple de l'ordre de 2% à 20%, en particulier de l'ordre de 5% à 15%, du diamètre de la ceinture à l'état serré.

Dans l'exemple qui vient d'être décrit, le collier est réalisé en une seule pièce dans une bande de métal.

## Revendications

1. Collier de serrage comprenant une ceinture métallique (10;110) configurée pour être serrée sur un objet, la ceinture présentant un renfoncement interne (20;120) comprenant un fond (23;123) délimité par des joues (22,24;122,124) orientées vers l'axe (A) de la ceinture, le collier présentant une réserve de capacité (30;130), formée par une portion de la ceinture susceptible de s'allonger sous l'effet d'une tension de serrage de la ceinture, la réserve de capacité étant délimitée, selon la direction circonférentielle de la ceinture, par des portions de liaison (36;136A,136B) dans lesquelles les joues (22,24;122,124) sont interrompues, **caractérisé en ce que** la réserve de capacité présente des portions de joues (32,34;132,134) orientées vers l'axe (A) de la ceinture.

2. Collier de serrage selon la revendication 1, dans lequel les portions de joues (32,34;132,134) présentent des bords courbes convexes (32',34';132',134').

3. Collier de serrage selon la revendication 1 ou 2, dans lequel la réserve de capacité (30;130) présente au moins une portion de bord concave (31A,31B;131A,131B).

4. Collier selon la revendication 3, dans lequel les portions de joues (32,34;132,134) sont au moins en partie situées axialement de part et d'autre de ladite portion de bord concave (31A,31B;131A,131B).

5. Collier de serrage selon la revendication 3 ou 4, dans lequel la portion de bord concave (31A,31B;131A,131B) s'étend dans l'encombrement circonférentiel de la ceinture (10;110).

6. Collier de serrage selon l'une des revendications 3 à 5, dans lequel la réserve de capacité (30) présente au moins un trou (31).

7. Collier de serrage selon la revendication 6, dans lequel le trou (31) s'étend jusque dans les portions de joues (32,34).

8. Collier de serrage selon l'une des revendications 6 et 7, dans lequel le trou (31) présente au moins l'une des caractéristiques géométriques suivantes :
- une longueur (L31) au moins égale à 30% de la longueur (LCA) de la réserve de capacité (30), ces longueurs étant mesurées selon la direction circonférentielle de la ceinture, et
- une largeur (L31') au moins égale à 50% de la largeur (LCE) de la ceinture (10), ces largeurs étant mesurées selon la direction de l'axe de la ceinture.

9. Collier selon l'une des revendications 1 à 8, dans lequel les portions de joues (32,34;132,134) sont formées dans des lobes (32A,34A;132A,134A).

10. Collier de serrage selon la revendication 9 prise en combinaison avec la revendication 3, dans lequel au moins l'un des lobes (32A, 34A) présente un sommet (S) situé axialement au droit d'une zone de fond de la concavité de la portion de bord concave (31A,31B;131A,131B).

11. Collier de serrage selon l'une des revendications 1 à 10, dans lequel la ceinture (10;110) porte une oreille (12) saillante au voisinage d'une première extrémité (10A) et un crochet (14) au voisinage d'une deuxième extrémité (10B), le crochet (14) présentant une paroi avant (14A) et une partie courante (14B), la paroi avant (14A) étant destinée à être retenue derrière l'oreille alors que le crochet est accroché sur l'oreille pour maintenir le collier à l'état serré, la partie courante (14B) reliant la paroi avant à la ceinture (10) et présentant une surface de prise (16) en saillie radiale vers l'extérieur et deux bordures latérales (18, 19) qui s'étendent axialement de part et d'autre de la surface de prise en étant radialement en retrait par rapport à la surface de prise.

12. Collier de serrage selon la revendication 11, dans lequel la surface de prise (16) est formée à l'arrière d'un bossage (17) de la partie courante (14B).

13. Collier de serrage selon l'une des revendications 1 à 12, formé en une seule pièce dans une bande de métal.

## Patentansprüche

1. Klemmschelle mit einem Metallband (10; 110), das so ausgebildet ist, dass es an einem Gegenstand festgeklemmt wird, wobei das Band eine innere Vertiefung (20; 120) aufweist, die einen Boden (23; 123) umfasst, der durch Wangen (22, 24; 122, 124) begrenzt ist, die zur Achse (A) des Bandes hin ausgerichtet sind,
wobei die Schelle eine Kapazitätsreserve (30; 130) aufweist, die durch einen Abschnitt des Bandes gebildet wird, das sich unter der Wirkung einer Spannkraft des Bandes verlängern kann, wobei die Kapazitätsreserve in Umfangsrichtung des Bandes durch Verbindungsabschnitte (36; 136A, 136b) begrenzt ist, in denen die Wangen (22, 24; 122, 124) unterbrochen sind,
**dadurch gekennzeichnet, dass**
die Kapazitätsreserve zur Achse (A) des Bandes ausgerichtete Wangenabschnitte (32, 34; 132, 134) aufweist.

2. Klemmschelle nach Anspruch 1, wobei die Wangenabschnitte (32, 34; 132, 134) konvexe gekrümmte Kanten (32', 34'; 132', 134') aufweisen.

3. Klemmschelle nach Anspruch 1 oder 2, wobei die Kapazitätsreserve (30; 130) mindestens einen konkaven Randabschnitt (31A, 31B; 131A, 131B) aufweist.

4. Klemmschelle nach Anspruch 3, wobei die Wangenabschnitte (32, 34; 132, 134) zumindest teilweise axial auf beiden Seiten des konkaven Randabschnitts (31A, 31B; 131A, 131B) angeordnet sind.

5. Klemmschelle nach Anspruch 3 oder 4, wobei sich der konkave Randabschnitt (31A, 31B; 131A, 131B) innerhalb des Umfangsraums des Bandes (10; 110) erstreckt.

6. Klemmschelle nach einem der Ansprüche 3 bis 5, wobei die Kapazitätsreserve (30) mindestens ein Loch (31) aufweist.

7. Klemmschelle nach Anspruch 6, wobei sich das Loch (31) bis in die Wangenabschnitte (32, 34) erstreckt.

8. Klemmschelle nach einem der Ansprüche 6 und 7, wobei das Loch (31) mindestens eine der folgenden geometrischen Eigenschaften aufweist:
- eine Länge (L31), die mindestens 30 % der Länge (LCA) der Kapazitätsreserve (30) entspricht, wobei diese Längen in Umfangsrichtung des Bandes gemessen werden, und
- eine Breite (L31'), die mindestens 50 % der Breite (LCE) des Bandes (10) entspricht, wobei diese Breiten in Richtung der Achse des Bandes gemessen werden.

9. Schelle nach einem der Ansprüche 1 bis 8, wobei die Wangenabschnitte (32, 34; 132, 134) in Vorsprüngen (32A, 34A; 132A, 134A) ausgebildet sind.

10. Klemmschelle nach Anspruch 9 in Kombination mit Anspruch 3, wobei mindestens einer der Vorsprünge (32A, 34A) einen Scheitel (S) aufweist, der axial direkt über einem Bodenbereich der Konkavität des konkaven Randabschnitts (31A, 31B; 131A, 131B) angeordnet ist.

11. Klemmschelle nach einem der Ansprüche 1 bis 10, wobei das Band (10; 110) einen Ansatz (12), der in der Nähe eines ersten Endes (10A) vorsteht, und einen Haken (14), der in der Nähe eines zweiten Endes (10B) angeordnet ist, aufweist, wobei der Haken (14) eine vordere Wandung (14A) und einen laufenden Teil (14B) aufweist, wobei die vordere Wandung (14A) dazu bestimmt ist, hinter dem Ansatz gehalten zu werden, während der Haken an dem Ansatz eingehakt wird, um die Klemmschelle im geklemmten Zustand zu halten, wobei der laufende Teil (14B) die vordere Wandung mit dem Band (10) verbindet und eine radial nach außen vorstehende Eingriffsfläche (16) und zwei Seitenränder (18, 19) aufweist, die sich axial auf beiden Seiten der Eingriffsfläche erstrecken und relativ zu der Eingriffsfläche radial zurückversetzt sind.

12. Klemmschelle nach Anspruch 11, wobei die Eingriffsfläche (16) an der Rückseite eines Vorsprungs (17) des laufenden Teils (14B) ausgebildet ist.

13. Klemmschelle nach einem der Ansprüche 1 bis 12, die aus einem Stück aus einem Metallstreifen gebildet ist.

## Claims

1. A clamping collar comprising a metal belt (10; 110) configured to be clamped on an object, the belt having an inner recess (20; 120) comprising a bottom (23; 123) delimited by cheeks (22, 24; 122, 124) oriented towards the axis (A) of the belt, the collar having a capacity reserve (30; 130), formed by a portion of the belt likely to elongate under the effect of a clamping tension of the belt, the capacity reserve being delimited, along the circumferential direction of the belt, by linking portions (36; 136A, 136B) in which the cheeks (22, 24; 122, 124) are interrupted, **characterized in that** the capacity reserve has cheek portions (32, 34; 132, 134) oriented towards the axis (A) of the belt.

2. The clamping collar according to claim 1, wherein the cheek portions (32, 34; 132, 134) have convex curved edges (32', 34'; 132', 134').

3. The clamping collar according to claim 1 or 2, wherein the capacity reserve (30; 130) has at least one concave edge portion (31A, 31B; 131A, 131B).

4. The clamping collar according to claim 3, wherein the cheek portions (32, 34; 132, 134) are at least partly located axially on either side of said concave edge portion (31A, 31B; 131A, 131B).

5. The clamping collar according to any of claims 3 and 4, wherein the concave edge portion (31A, 31B; 131A, 131B) extends within the circumferential space requirement of the belt (10; 110).

6. The clamping collar according to any of claims 3 to 5, wherein the capacity reserve (30) has at least one hole (31).

7. The clamping collar according to claim 6, wherein the hole (31) extends up to the cheek portions (32, 34).

8. The clamping collar according to any of claims 6 to 7, wherein the hole (31) has at least one of the following geometric characteristics:
- a length (L31) at least equal to 30% of the length (LCA) of the capacity reserve (30), these lengths being measured along the circumferential direction of the belt, and
- a width (L31') at least equal to 50% of the width (LCE) of the belt (10), these widths being measured along the direction of the axis of the belt.

9. The clamping collar according to any of claims 1 to 8, wherein the cheek portions (32, 34; 132,134) are formed in lobes (32A, 34A; 132A, 134A).

10. The clamping collar according to claim 9 taken in combination with claim 3, wherein at least one of the lobes (32A, 34A) has an apex (S) located axially in line with a bottom area of the concavity of the concave edge portion (31A, 31B; 131A, 131B).

11. The clamping collar according to any of claims 1 to 10, wherein the belt (10;110) carries a protruding lug (12) in the vicinity of a first end (10A) and a hook (14) in the vicinity of a second end (10B), the hook (14) having a front wall (14A) and a common part (14B), the front wall (14A) being intended to be retained behind the lug while the hook is hooked on the lug to keep the collar in the clamped state, the common part (14B) linking the front wall to the belt (10) and having a gripping surface (16) protruding radially outwardly and two lateral borders (18, 19) which extend axially on either side of the gripping surface by being radially set back from the gripping surface.

12. The clamping collar according to claim 11, wherein the gripping surface (16) is formed at the rear of a boss (17) of the common part (14B).

13. The clamping collar according to any of claims 1 to 12, formed in one piece from a metal strip.
